# EUROPÄISCHE PATENTANMELDUNG

(11) **EP 4 209 406 A1**
(43) Veröffentlichungstag der Anmeldung: **12.07.2023**
(21) Anmeldenummer: 22213949.5
(22) Anmeldetag: 15.12.2022
(51) Int. Cl.: B62D 15/02, G08G 1/16, G09F 9/30

(54) **VERFAHREN ZUR STEUERUNG EINES AUTOMATISIERTEN PARKSYSTEMS UND AUTOMATISIERTES PARKSYSTEM**

(30) Priorität: 05.01.2022 DE 102022200068
(71) Anmelder: Continental Automotive Technologies GmbH, 30165 Hannover (DE)
(72) Erfinder: Rink, Klaus, 60488 Frankfurt am Main (DE); Dr. Stählin, Ulrich, 60488 Frankfurt am Main (DE); Keck, Patrick, 60488 Frankfurt am Main (DE)
(74) Vertreter: Continental Corporation

(57) **Zusammenfassung**

Die Erfindung betrifft ein Verfahren zur Steuerung eines automatisierten Parksystems (10), wobei das Parksystem (10) einen Übergabebereich (12), an dem ein Fahrzeug (14) an das Parksystem (10) übergeben werden kann, sowie einen Parkbereich (16) aufweist, in dem das Fahrzeug (14) abgestellt werden kann, wobei das Parksystem (10) eine Kommunikationseinrichtung (18), eine Steuerung (21) sowie zumindest einen Sensor (20) zur Überwachung des Parkbereichs (16) aufweist, wobei die Kommunikationseinrichtung (18) eine Kommunikation mit einem zu parkenden Fahrzeug (14) aufbauen kann und die Steuerung (21) über die Kommunikationseinrichtung (18) Steuerbefehle an das Fahrzeug (14) senden kann, wobei die folgenden Schritte wiederholt ausgeführt werden:
a) Ermittlung der Position des Fahrzeugs (14) durch den zumindest einen Sensor (20) und Ermittlung eines Fahrweges (22) des Fahrzeugs (14) durch die Steuerung (21) sowie Senden von Fahrbefehlen für den Fahrweg (22) über die Kommunikationseinrichtung (18) an das Fahrzeug;
b) Feststellen eines Objektes (26) innerhalb des Parksystem (10), dessen Bewegungsweg (28) nicht vom Parksystem (10) gesteuert werden kann, sowie Ermittlung und/oder Abschätzung der Position und eines Bewegungsweges (28) des Objektes (26) durch die Sensoren (20) sowie die Steuerung (21),
c) Prüfen, ob sich der Fahrweg (22) des Fahrzeugs (14) und der Bewegungsweg (28) des Objekts (26) überschneiden können durch die Steuerung (21),
d) Wenn eine mögliche Überschneidung zwischen dem Fahrweg (22) und dem Bewegungsweg (28) detektiert wurde, Auslösung zumindest einer Maßnahme des Parksystems (14), die eine Interaktion mit dem Objekt (26) umfasst und die einen Zusammenstoß des Fahrzeugs (14) mit dem Objekt (26) verhindert.

Die Erfindung betrifft des Weiteren ein Parksystem, das zur Durchführung dieses Verfahrens ausgebildet ist.

## Beschreibung

Die Erfindung betrifft ein Verfahren zur Steuerung eines automatisierten Parksystems, wobei das Parksystem einen Übergabebereich, an dem das Fahrzeug an das Parksystem übergeben wird, sowie einen Parkbereich aufweist, in dem das Fahrzeug abgestellt werden kann, wobei das Parksystem eine Kommunikationseinrichtung, eine Steuerung sowie zumindest einen Sensor zur Überwachung des Parkbereichs aufweist, wobei die Kommunikationseinrichtung eine Kommunikation mit einem zu parkenden Fahrzeug aufbauen kann und die Steuerung über die Kommunikationseinrichtung Steuerbefehle an das Fahrzeug senden kann. Die Erfindung betrifft des Weiteren ein solches Parksystem.

Aus dem Stand der Technik sind automatisierte Parksysteme bekannt, bei welchen das Fahrzeug vom Fahrzeugnutzer an das Parksystem übergeben wird. Anschließend wird das Fahrzeug durch das Parksystem automatisiert in einem Abstellbereich des Parksystems geparkt. Sobald der Fahrzeugnutzer sein Fahrzeug nutzen will, wird das Fahrzeug vom Parksystem an die Übergabestation geführt und an dieser an den Fahrzeugnutzer übergeben.

Beispielsweise kann eine automatische Steuerung eines Fahrzeugs im Rahmen einer Fahrvorgabe als Automated Valet Parking (AVP) nach Typ 2 ausgeführt sein. Dabei handelt es sich um ein System, bei welchem ein Fahrzeug in einem Parkhaus abgestellt wird und die Insassen aussteigen können. Das Fahrzeug wird dann durch eine automatische Steuerung, welche zumindest im Wesentlichen auf einer im Parkhaus verbauten Sensorik und Infrastruktur basiert, zu einem freien Parkplatz gelenkt und in diesem geparkt. Kommen die Insassen zurück und möchten ihr Fahrzeug wieder übernehmen, wird das Fahrzeug ebenso wieder auf einen Übergabeplatz gefahren.

Entsprechende Systeme befinden sich derzeit in Entwicklung und Standardisierung, beispielsweise im Rahmen der Norm ISO 23374. Dabei ist insbesondere vorgesehen, dass das Fahrzeug selbst nicht zwingend Umfeldsensoren zu haben braucht, um an dem System teilzunehmen. Dementsprechend muss sich das Fahrzeug auf die Infrastruktur verlassen können, von welcher es Fahrvorgaben erhält. Befinden sich beispielsweise auch andere Fahrzeuge oder Personen in einem Parkhaus, ist es wichtig, dass die automatische Steuerung des Fahrzeugs sehr zuverlässig ist und auch bei unvorhergesehenen Ereignissen, beispielsweise ausgelöst durch unvorsichtige Personen, zügig reagieren kann. Insbesondere der Schutz von Personen (Vulnerable Road User - VRU), die sich im Parksystem aufhalten können, hat hohe Priorität.

Aufgabe der Erfindung ist es, ein Parksystem sowie ein Verfahren zum Betrieb eines solchen Parksystems bereitstellt, dass zuverlässig einen Zusammenstoß zwischen einem Fahrzeug und einem Objekt, das sich im Parksystem befindet, verhindert.

Zur Lösung der Aufgabe ist ein Verfahren zur Steuerung eines automatisierten Parksystems vorgesehen, wobei das Parksystem einen Übergabebereich, an dem das Fahrzeug an das Parksystem übergeben wird, sowie einen Parkbereich aufweist, in dem das Fahrzeug abgestellt werden kann, wobei das Parksystem eine Kommunikationseinrichtung, eine Steuerung sowie zumindest einen Sensor zur Überwachung des Parkbereichs aufweist, wobei die Kommunikationseinrichtung eine Kommunikation mit einem zu parkenden Fahrzeug aufbauen kann und die Steuerung über die Kommunikationseinrichtung Steuerbefehle an das Fahrzeug senden kann. Es werden die folgenden Schritte wiederholt ausgeführt:
a) Ermittlung der Position des Fahrzeugs durch den zumindest einen Sensor, Ermittlung eines Fahrweges für das Fahrzeug durch die Steuerung und Senden von Fahrbefehlen für den ermittelten Fahrweg an das Fahrzeug über die Kommunikationseinrichtung,
b) Feststellen eines Objektes innerhalb des Parksystem, dessen Bewegungsweg nicht vom Parksystem gesteuert werden kann, sowie Ermittlung der Position und eines Bewegungsweges des Objektes durch den zumindest einen Sensor sowie die Steuerung,
c) Prüfen, ob sich der Fahrweg des Fahrzeugs und der Bewegungsweg des Objekts überschneiden können durch die Steuerung,
d) Wenn eine mögliche Überschneidung zwischen dem Fahrweg und dem Bewegungsweg detektiert wurde, Auslösung zumindest einer Maßnahme des Parksystems, die eine Interaktion mit dem Objekt umfasst und die einen Zusammenstoß des Fahrzeugs mit dem Objekt verhindert.

In einem automatisierten Parksystem, insbesondere in einem AVP-Type 2-System, wird das Fahrzeug durch die Infrastruktur des Parksystems innerhalb des Parksystems ferngesteuert. Das Parksystem weist hierzu eine Sensorik auf, die das Fahrzeug, dessen Position sowie Bewegungsrichtung erfassen kann. Des Weiteren weist das Parksystem eine Steuerung auf, die für das Fahrzeug einen Fahrweg innerhalb des Parksystems bestimmt, beispielsweise zu einem Parkplatz oder einer Übergabestation. Über eine Kommunikationseinrichtung wird eine Verbindung zum Fahrzeug aufgebaut und das Fahrzeug entlang des vorbestimmten Fahrwegs zum Abstellplatz gesteuert.

Üblicherweise erfolgt die Steuerung des Fahrzeugs mit einem Regelkreis, in dem wiederholt die Position und die Fahrrichtung des Fahrzeugs bestimmt werden, um den Fahrweg gegebenenfalls anzupassen oder zu korrigieren.

Erfindungsgemäß umfasst das Verfahren des Weiteren die Erfassung von Objekten innerhalb des Parksystems. Diese Objekte können beispielsweise Gegenstände sein, die unbeabsichtigt in das Parksysteme gelangt sind, oder Personen, die sich im Parksystem aufhalten.

Das Parksystem erfasst diese Objekte und stellt zunächst fest, ob es sich um ein Objekt handelt, dessen Bewegungsweg durch das Parksysteme gesteuert, insbesondere ferngesteuert, werden kann. Dazu kann das Parksystem beispielsweise versuchen, über die Kommunikationseinrichtung eine Kommunikation mit dem Objekt aufzubauen. Des Weiteren werden Fahrzeuge üblicherweise an einer Übergabestation registriert und deren Weg innerhalb des Parksystems überwacht. Kann ein Objekt keinem der registrierten Fahrzeuge zugeordnet werden, muss von einem anderen Objekt ausgegangen werden.

Anschließend wird über die Sensoren des Parksystems die Position sowie eine Bewegungsrichtung des Objekts erfasst und ein Bewegungsweg bestimmt oder abgeschätzt.

Nachfolgend wird geprüft, ob es Überschneidungen zwischen dem Fahrweg des Fahrzeugs und dem Bewegungsweg des Objektes gibt, insbesondere, ob die Gefahr einer Kollision zwischen dem Fahrzeug und dem Objekt besteht.

Ist dies der Fall, löst das Parksystem eine Maßnahme aus, um mit dem Objekt in eine Interaktion zu treten. Durch diese Interaktion soll das Objekt derart beeinflusst werden, dass ein Zusammenstoß mit dem Fahrzeug verhindert werden kann und/oder sich der Bewegungsweg des Objekts und der Fahrweg des Fahrzeugs nicht überschneiden.

Anschließend erfolgt ein neuer Zyklus des Regelkreises, d. h. es wird erneut die Position und die Fahrtrichtung des Fahrzeugs bestimmt und der Fahrweg gegebenenfalls angepasst oder korrigiert sowie die Position sowie der Bewegungsweg des Objekts erfasst bzw. abgeschätzt. Ergibt die nachfolgende Überprüfung des Fahrweges und des Bewegungsweges, dass sich diese weiterhin überschneiden, wenn die Maßnahmen zur Interaktion fortgesetzt oder gegebenenfalls weitere Maßnahmen veranlasst.

Ergibt die Überprüfung, dass sich der Bewegungsweg des Objekts und der Fahrweg des Fahrzeugs nicht mehr überschneiden, werden die Maßnahmen gestoppt.

Auch wenn die Maßnahmen zur Interaktion gestoppt werden, wird der Bewegungsweg des Objekts weiterhin überprüft, um zu prüfen, ob sich der Bewegungsweg des Objekts derart ändert, dass es zu einer erneuten Überschneidung mit dem Fahrweg des Fahrzeugs kommt.

Beispielsweise kann die Interaktion eine Warnung des Objekts und/oder eine Information des Objekts umfassen, dass sich das Objekt im Fahrweg des Fahrzeugs befindet. Ist das Objekt eine Person, die sich im Parksystem befindet, kann diese durch die Interaktion auf das Fahrzeug aufmerksam gemacht werden, sodass die Person geeignete Maßnahmen ergreifen kann, um sich aus dem Fahrweg des Fahrzeugs zu bewegen.

Die Interaktion kann auch eine Beeinflussung des Bewegungsweges des Objekts, insbesondere der Person, umfassen. Beispielsweise kann durch geeignete Maßnahmen, beispielsweise ein Leitsystem für Personen, die Person so geleitet werden, dass sich deren Bewegungsweg nicht mit dem Fahrweg des Fahrzeugs überschneidet.

Die Interaktion kann beispielsweise akustisch erfolgen. Beispielsweise kann die Person durch akustische Warnhinweise, beispielsweise Hupsignale oder Alarmsignale gewarnt werden. Des Weiteren können auch Hinweise, Anweisungen oder Befehle in Sprachform ausgegeben werden, die eine Person warnen oder konkrete Verhaltenshinweise geben. Insbesondere Sprachhinweise haben den Vorteil, dass die Person direkt angesprochen werden kann, beispielsweise, um die Person auf einen sicheren Weg hinzuweisen oder der Person Verhaltenshinweise zu geben, wie sie sich aus dem Fahrweg des Fahrzeugs und/oder dem Parksystem begeben kann.

Die Interaktion kann auch optisch erfolgen, beispielsweise durch Lichtsignale, Leuchttafeln oder Hinweisschilder. Insbesondere kann durch entsprechende Hinweise, beispielsweise durch Pfeile eine Richtung vorgegeben werden, in der sich die Person bewegen soll, um sicherzustellen, dass sich diese außerhalb des Fahrwegs des Fahrzeugs befindet. Insbesondere kann durch Steuerung des Lichts innerhalb des Parksystems einer Person ein Bewegungsweg vorgegeben werden. Dadurch ist auch eine sprachunabhängige Beeinflussung möglich.

Optional kann die Interaktion über Kommunikationsmittel erfolgen, beispielsweise durch Hinweise, die an ein Smartphone oder eine andere Kommunikationseinrichtung, die die Person bei sich trägt, gesendet werden. Beispielsweise kann geprüft werden, ob Nachrichten auf ein Smartphone gesendet werden können, beispielsweise über WLAN, Bluetooth oder einen andere Übertragungsstandard. Beispielsweise kann auch eine App genutzt werden, mit der sich Nutzer am Parksystem anmelden können oder müssen, bevor sie dieses betreten können.

Vorzugsweise können verschiedene Interaktionsmöglichkeiten kombiniert werden, um die Person bestmöglich darauf aufmerksam zu machen, dass sich diese in einem Fahrweg eines Fahrzeugs befindet. Insbesondere können auch die Intensität und die Anzahl der Interaktionen, beispielsweise in Abhängigkeit vom Abstand des Fahrzeugs zu einer Person oder dem Verhalten der Person, variiert werden.

Die Maßnahme kann beispielsweise durch das Fahrzeug selbst erfolgen, wobei die Maßnahme durch das Parksystem gesteuert bzw. veranlasst wird. Beispielsweise können akustische oder optische Einrichtungen des Fahrzeugs, beispielsweise eine Hupe, Scheinwerfer, Blinker oder Beleuchtungseinrichtungen, verwendet werden. Dadurch kann die Person unmittelbar auf das Fahrzeug sowie dessen Fahrtrichtung aufmerksam gemacht, so dass die Person beispielsweise den Fahrweg des Fahrzeugs abschätzen und sich aus diesem entfernen kann.

Alternativ oder zusätzlich kann die Interaktion auch durch das Parksystem erfolgen, beispielsweise durch optische oder akustische Einrichtungen innerhalb des Parksystems. Dies kann den Vorteil haben, dass Einrichtungen in unmittelbarer Nähe der Person aktiviert werden, um diese auf das Fahrzeug aufmerksam zu machen. Des Weiteren kann durch Einrichtungen des Parksystems auch eine Beeinflussung des Bewegungsweges der Person erfolgen, beispielsweise indem die Person auf einen bestimmten Weg aufmerksam gemacht wird.

Vorzugsweise wählt das Parksystem in Abhängigkeit von der Position des Fahrzeugs, dem Fahrweg des Fahrzeugs, der Position des Objektes und/oder dem Bewegungsweg des Objekts zumindest eine Interaktion aus.

Beispielsweise kann auch die Art des Objektes erfasst werden und die Art der Interaktion erfolgt in Abhängigkeit von der Art des erkannten Objekts. Wird beispielsweise eine Person erkannt, können Sprachhinweise oder Hinweispfeile verwendet werden, um der Person einen Bewegungsweg aufzuzeigen, bei dem keine Überschneidung mit dem Fahrweg des Fahrzeugs erfolgt. Wird beispielsweise ein Tier erkannt, können stattdessen Schall- oder Lichtsignale verwendet werden, um das Tier vom Fahrweg des Fahrzeugs zu vertreiben.

Des Weiteren kann vom Parksystem erfasst werden, ob das Objekt auf die Maßnahmen reagiert und die Maßnahmen können entsprechend der Reaktion des Objekts angepasst werden. Erfolgt keine Reaktion des Objekts kann beispielsweise ein Mitarbeiter informiert werden und/oder das Fahrzeug wird gestoppt, bis sich das Objekt außerhalb des Fahrwegs des Fahrzeugs befindet.

Zusätzlich können die Maßnahmen und die Reaktion der Person mit Kameras, die im Parksystems vorhanden sind, aufgezeichnet und/oder dokumentiert werden. Beispielsweise kann so eine Person identifiziert werden, die mutwillig den Fahrweg der Fahrzeuge stört. Des Weiteren können die Maßnahmen, beispielsweise für eine spätere Auswertung, dokumentiert werden.

Weitere Vorteile und Merkmale finden sich in der nachfolgenden Beschreibung in Verbindung mit den beigefügten Zeichnungen. In diesen zeigen:
- Figur 1: eine schematische Darstellung eines automatisierten Parksystems; und
- Figur 2: ein Ablaufdiagramm für ein Verfahren zur Prüfung eines Fahrzeugs im Parksysteme aus Figur 1.

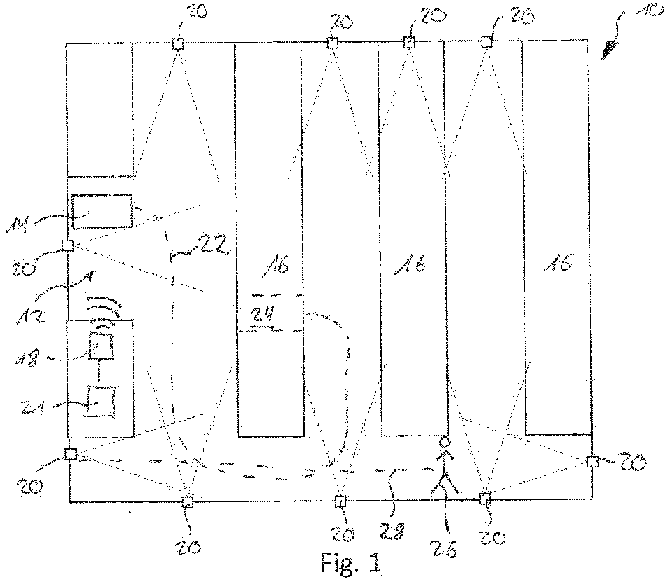

In Figur 1 ist ein automatisiertes Parksystem 10 gezeigt. Das Parksystem hat einen Übergabebereich 12, an dem ein Fahrzeug 14 an das Parksystem 10 übergeben werden kann, sowie einen Parkbereich 16, in dem das Fahrzeug 12 abgestellt werden kann.

Das Parksystem 10 weist eine Kommunikationseinrichtung 18 auf, die eine Kommunikation mit dem Fahrzeug 14 aufbauen kann. Des Weiteren weist das Parksystem 10 mehrere Sensoren 20 auf, die den gesamten Parkbereich 16 überwachen, sowie eine Steuereinheit 21, die einen Fahrweg 22 für das Fahrzeug 14 von Übergabebereich 12 zu einem Abstellplatz 24 im Parkbereich 16 berechnet und Fahrbefehle an das Fahrzeug 14 sendet, damit dieses selbstständig entlang des Fahrwegs 22 zum Abstellplatz 24 fährt.

Ein Fahrzeugnutzer übergibt sein Fahrzeug 14 im Übergabebereich 12 an das Parksystem 10. Anschließend übernimmt das Parksystem 10 die Steuerung des Fahrzeugs 14 und steuert diese entlang des Fahrwegs 22 zum Abstellplatz 24. Will der Fahrzeugnutzer sein Fahrzeug 14 nutzen, wird von der Steuereinheit 21 ein Fahrweg 22 vom Abstellplatz 24 zum Übergabebereich 12 berechnet. Anschließend werden von der Kommunikationseinrichtung 18 entsprechende Fahrbefehle an das Fahrzeug 14 übermittelt, sodass das Fahrzeug 14 vom Parksystem 10 an den Übergabebereich gefahren werden kann.

Das Parksystem 10 übernimmt nach der Übergabe des Fahrzeugs 14 im Übergabebereich die Steuerung des Fahrzeugs innerhalb des Parksysteme 10, bis das Fahrzeug 14 an den Fahrzeugnutzer zurückgegeben wird.

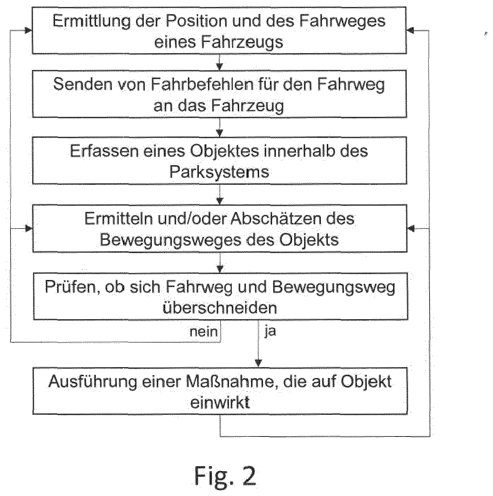

Die Steuerung des Fahrzeugs 14 erfolgt hierbei mit einem Regelkreis, in dem wiederholt die Position sowie die Fahrtrichtung des Fahrzeugs über die Sensoren 20 des Parksystems 10 geprüft und der Fahrweg des Fahrzeugs gegebenenfalls angepasst oder korrigiert wird (siehe Figur 2). Befinden sich mehrere Fahrzeuge 14 im Parksystem 10, werden die Fahrwege 22 für diese so berechnet, dass sich diese nicht überschneiden.

Neben dem Fahrzeug 14 bzw. mehreren Fahrzeugen 14 können sich auch andere Objekte innerhalb des Parksystems 10, insbesondere innerhalb des Parkbereichs 16, befinden. Beispielsweise können Personen unbefugt in den Parkbereich 16 gelangen oder sich Tiere im Parkbereich 16 aufhalten. Des Weiteren können auch andere Objekte in das Parksystem gelangen.

Das gesamte Parksystem 10, insbesondere der Parkbereich 16, wird von den Sensoren 20 erfasst bzw. überwacht. Da die im Parksystem vorhandenen Fahrzeuge vorab am Übergabebereich 12 registriert wurden, und deren Position und Bewegungsrichtung bekannt ist, können weitere Objekte 26, die in des Parksystem 10 gelangt sind, als Fremdobjekte erkannt werden.

Wird ein fremdes Objekt 26 innerhalb des Parksystems 10, insbesondere innerhalb des Parkbereichs 16, erfasst, kann zunächst geprüft werden, um welche Art Objekt es sich handelt. Beispielsweise kann der Steuereinheit 21 eine Datenbank und/oder ein Erkennungsalgorithmus für verschiedene Objekte 26 vorhanden sein. Des Weiteren wird geprüft ob und wie sich das Objekt 26 innerhalb des Parksystems bewegt und gegebenenfalls ein voraussichtlicher Bewegungsweg 28 des Objekts 26 berechnet und/oder abgeschätzt.

Wird ein feststehendes bzw. unbewegliches Objekt 26 erkannt, werden entsprechende Maßnahmen eingeleitet, um einen Zusammenstoß mit dem Fahrzeug 14 zu vermeiden. Beispielsweise kann das Fahrzeug 14 abgebremst oder der Fahrweg 22 des Fahrzeugs 14 geändert werden. Des Weiteren kann Personal benachrichtigt werden, dass das Objekt 26 entfernt.

Wird ein sich bewegendes Objekt 26, beispielsweise ein Tier oder eine Person, erkannt, wird dessen Position und Bewegung erfasst sowie der voraussichtliche Bewegungsweg 28 des Objekts 26 berechnet und/oder abgeschätzt.

Nachfolgend wird geprüft, ob sich der berechnete und/oder geschätzte Bewegungsweg 28 des Objekts 26 mit dem Fahrweg 22 des Fahrzeugs 14 überschneidet. Stellt die Steuereinheit 21 eine mögliche Überschneidung des Bewegungswegs 28 und des Fahrwegs 22 fest, wird zumindest eine Maßnahme initiiert, die das Objekt dazu veranlassen soll, den Fahrweg 22 des Fahrzeugs zu verlassen bzw. den Bewegungsweg derart zu ändern, dass keine Überschneidung mit dem 22 Fahrweg des Fahrzeugs 14 vorliegt.

Die Maßnahmen sind hierbei darauf ausgelegt, auf das Objekt 26 einzuwirken, um den Parkvorgang des Fahrzeugs 14 nach Möglichkeit nicht zu behindern oder zu verzögern. Sollte dennoch die Gefahr eines Zusammenstoßes mit dem Fahrzeug 14 bestehen, kann das Fahrzeug 14 über die Steuereinheit 21 abgebremst oder dessen Fahrweg 22 verändert werden.

Die Interaktion mit dem Objekt kann beispielsweise akustische Signale umfassen, wobei die akustischen Signale über Lautsprecher im Parksystem 10 ausgegeben werden können. Alternativ oder ergänzend können auch Systeme des Fahrzeugs 14 verwendet werden.

Die akustischen Signale umfassen beispielsweise Warntöne, durch die Objekt 26 auf eine Gefahr hingewiesen wird. Vorzugsweise werden diese Warntöne so ausgegeben, dass das Objekt 26 bzw. die Person die Richtung erkennen kann, aus der sich das Fahrzeug nähert bzw. aus der eine Gefahr eines Zusammenstoßes droht. Beispielsweise können hierzu Signale des Fahrzeugs verwendet werden oder einzelne Lautsprecher innerhalb des Parksystems 10.

Durch gezielte Ansteuerung einzelner Lautsprecher innerhalb des Parksystems 10 kann beispielsweise auch der Bewegungsweg 28 des Objekts 26 aktiv beeinflusst werden. Beispielsweise kann die Intensität eines Warntons zunehmen, wenn sich das Objekt 26 auf das Fahrzeug 14 bzw. auf den Fahrweg 22 zu bewegt, oder abnehmen, wenn sich das Objekt 26 vom Fahrzeug 14 bzw. den Fahrweg 22 entfernt. Beispielsweise können hierbei die Lautstärke des Warntons, dessen Frequenz bzw. Tonlage oder eine Wiederholfrequenz verändert werden.

Des Weiteren können über Lautsprecher auch Hinweise oder Sprachbefehle ausgegeben werden. Über diese können ebenfalls Warnungen ausgegeben werden. Es können aber auch zusätzlich Handlungsanweisungen ausgegeben werden, beispielsweise welchen Weg eine Person nutzen soll oder wie sich diese innerhalb des Parksystems 10 bewegen soll.

Alternativ können auch optische Signale ausgegeben werden, wobei auch hier die Systeme des Fahrzeugs oder im Parksystem 10 vorhandene Systeme verwendet werden können. Beispielsweise kann im Parksystem 10 ein Leitsystem installiert sein, das einer Person einen Bewegungsweg vorgeben kann. Des Weiteren können über ein solches Leitsystem auch Wege gekennzeichnet werden, die die Person nicht nutzen soll, um den Fahrweg des Fahrzeugs nicht zu kreuzen.

Wird das Objekt 26 als Person erkannt, können beispielsweise auch Signale ausgegeben werden, die über eine Kommunikationseinrichtung der Person empfangen werden können, beispielsweise über ein Smartphone. Beispielsweise können Signale über Bluetooth, WLAN, oder eine andere Übertragungsmöglichkeit an das Smartphone ausgegeben werden.

Die Maßnahmen werden hierbei in Abhängigkeit von dem erfassten Objekt 26, dessen Bewegungsweg 28 und gegebenenfalls weiteren äußeren Umständen, wie Helligkeit, anderen Lärmquellen oder der Tageszeit ausgewählt. Beispielsweise sind Lichtsignale nachts oder bei geringer Beleuchtung besser erkennbar. Des Weiteren können akustische Signale nachts außerhalb des Parksystems als störend empfunden werden.

Nach Ausführung der Maßnahmen wird der Bewegungsweg 28 des Objekts 26 überprüft sowie neu ermittelt bzw. abgeschätzt. In Abhängigkeit des neu ermittelten oder abgeschätzten Bewegungswegs 28 werden die Maßnahmen fortgesetzt, gestoppt oder weitere Maßnahmen eingeleitet. Beispielsweise können die Maßnahmen ausgesetzt werden, wenn sich das Objekt 26 auf einem gewünschten Bewegungsweg befindet, der keine Überschneidung mit dem Fahrweg 22 des Fahrzeugs 14 hat.

Auch wenn sich der Bewegungsweg 28 nicht mehr mit dem Fahrweg 22 des Fahrzeugs 14 überschneidet, wird weiterhin der Bewegungsweg 28 des Objekts überwacht bzw. der voraussichtliche Bewegungsweg 28 bestimmt und/oder geschätzt. Sobald erneut eine Überschneidung mit dem Fahrweg 22 des Fahrzeugs 14 vorliegt, werden erneut entsprechende Maßnahmen zur Interaktion mit dem Objekt eingeleitet.

Dieser Vorgang wird fortgesetzt, bis sich das Objekt 26 nicht mehr im Parksystem 10, insbesondere nicht mehr im Parkbereich 16 befindet.

Zusätzlich können die Maßnahmen sowie der Bewegungsweg 28 des Objekts 26 durch das Parksystem 10 dokumentiert werden. Beispielsweise können diese Informationen ausgewertet werden, um die Wirksamkeit einzelner Maßnahmen beurteilen zu können oder Fehlverhalten bestimmter Objekte, insbesondere einzelner Personen dokumentieren und entsprechende Maßnahmen einleiten zu können.

## Patentansprüche

1. Verfahren zur Steuerung eines automatisierten Parksystems (10), wobei das Parksystem (10) einen Übergabebereich (12), an dem ein Fahrzeug (14) an das Parksystem (10) übergeben werden kann, sowie einen Parkbereich (16) aufweist, in dem das Fahrzeug (14) abgestellt werden kann, wobei das Parksystem (10) eine Kommunikationseinrichtung (18), eine Steuerung (21) sowie zumindest einen Sensor (20) zur Überwachung des Parkbereichs (16) aufweist, wobei die Kommunikationseinrichtung (18) eine Kommunikation mit einem zu parkenden Fahrzeug (14) aufbauen kann und die Steuerung (21) über die Kommunikationseinrichtung (18) Steuerbefehle an das Fahrzeug (14) senden kann, wobei die folgenden Schritte wiederholt ausgeführt werden:
a) Ermittlung der Position des Fahrzeugs (14) durch den zumindest einen Sensor (20) und Ermittlung eines Fahrweges (22) des Fahrzeugs (14) durch die Steuerung (21) sowie Senden von Fahrbefehlen für den Fahrweg (22) über die Kommunikationseinrichtung (18) an das Fahrzeug;
b) Feststellen eines Objektes (26) innerhalb des Parksystem (10), dessen Bewegungsweg (28) nicht vom Parksystem (10) gesteuert werden kann, sowie Ermittlung und/oder Abschätzung der Position und eines Bewegungsweges (28) des Objektes (26) durch den zumindest einen Sensor (20) sowie die Steuerung (21),
c) Prüfen, ob sich der Fahrweg (22) des Fahrzeugs (14) und der Bewegungsweg (28) des Objekts (26) überschneiden können durch die Steuerung (21),
d) Wenn eine mögliche Überschneidung zwischen dem Fahrweg (22) und dem Bewegungsweg (28) detektiert wurde, Auslösung zumindest einer Maßnahme des Parksystems (14), die eine Interaktion mit dem Objekt (26) umfasst und die einen Zusammenstoß des Fahrzeugs (14) mit dem Objekt (26) verhindert.

2. Verfahren nach Anspruch 1, **dadurch gekennzeichnet, dass** die Interaktion eine Warnung des Objekts (26) und/oder eine Information des Objekts (26) umfasst, dass sich das Objekt (26) im Fahrweg (22) des Fahrzeugs (14) befindet.

3. Verfahren nach einem der Ansprüche 1 und 2, **dadurch gekennzeichnet, dass** die Interaktion eine Beeinflussung des Bewegungsweges (28) des Objekts (26) umfasst.

4. Verfahren nach einem der vorhergehenden Ansprüche, **dadurch gekennzeichnet, dass** die Interaktion akustisch erfolgt.

5. Verfahren nach einem der vorhergehenden Ansprüche, **dadurch gekennzeichnet, dass** die Interaktion optisch erfolgt.

6. Verfahren nach einem der vorhergehenden Ansprüche, **dadurch gekennzeichnet, dass** die Interaktion über Kommunikationsmittel erfolgt.

7. Verfahren nach eine der vorhergehenden Ansprüche, **dadurch gekennzeichnet, dass** die Interaktion durch das Fahrzeug (14) erfolgt.

8. Verfahren nach eine der vorhergehenden Ansprüche, **dadurch gekennzeichnet, dass** die Interaktion durch das Parksystem (10) erfolgt.

9. Verfahren nach einem der vorhergehenden Ansprüche, **dadurch gekennzeichnet, dass** das Parksystem (10) in Abhängigkeit von der Position des Fahrzeugs (14), dem Fahrweg (22) des Fahrzeugs (14), der Position des Objektes (26) und/oder dem Bewegungsweg (28) des Objekts (26) zumindest eine Interaktion auswählt.

10. Verfahren nach einem der vorhergehenden Ansprüche, **dadurch gekennzeichnet, dass** der Bewegungsweg (28) des Objekts (26), das Objekt (26) und/oder die Maßnahmen dokumentiert und/oder gespeichert werden.

11. Automatisierten Parksystems (10), wobei das Parksystem (10) einen Übergabebereich (12), an dem ein Fahrzeug (14) an das Parksystem (10) übergeben werden kann, sowie einen Parkbereich (16) aufweist, in dem das Fahrzeug (14) abgestellt werden kann, wobei das Parksystem (10) eine Kommunikationseinrichtung (18), eine Steuerung (21) sowie zumindest einen Sensor (20) zur Überwachung des Parkbereichs (16) aufweist, wobei die Kommunikationseinrichtung (18) eine Kommunikation mit einem zu parkenden Fahrzeug (14) aufbauen kann und die Steuerung (21) über die Kommunikationseinrichtung (18) Steuerbefehle an das Fahrzeug (14) senden kann, wobei das Parksystem (10) zur Durchführung eines Verfahrens nach einem der vorhergehenden Ansprüche ausgebildet ist.
